# EUROPEAN PATENT APPLICATION

(11) **EP 4 606 775 A1**
(43) Date of publication of application: **27.08.2025**
(21) Application number: 24223353.4
(22) Date of filing: 27.12.2024
(51) Int. Cl.: C01G 53/04, C01G 53/05, C01G 53/506, H01M 4/131, H01M 4/36, H01M 4/525

(54) **POSITIVE ELECTRODE ACTIVE MATERIAL FOR RECHARGEABLE LITHIUM BATTERY, METHOD OF MANUFACTURING THE SAME, AND RECHARGEABLE LITHIUM BATTERY INCLUDING THE SAME**

(30) Priority: 26.02.2024 KR 20240027444
(71) Applicant: SAMSUNG SDI CO., LTD., Yongin-si, Gyeonggi-do 17084 (KR)
(72) Inventor: JANG, Jungsue, 17084 Yongin-si (KR); CHANG, Donggyu, 17084 Yongin-si (KR); KIM, JinYoung, 17084 Yongin-si (KR); SHIM, Jaeha, 17084 Yongin-si (KR); KANG, Taegeun, 17084 Yongin-si (KR); PARK, Jingyu, 17084 Yongin-si (KR)
(74) Representative: Marks & Clerk LLP

(57) **Abstract**

Example embodiments include positive electrode active materials, manufacturing methods thereof, and rechargeable lithium batteries. The positive electrode active material includes a positive electrode active material having a first particle that has a first surface and a second surface and includes a lithium composite oxide, and a first coating layer on the first surface. A surface area ratio of the first surface to the second surface is in a range of about 3:7 to about 8:2. The first coating layer has a cobalt amount that is greater than a cobalt amount of the first particle. The cobalt amount of the first coating layer is in a range of about 30 at% to about 100 at%.

## Description

### BACKGROUND

Examples of the present invention relate to a positive electrode active material, a method of manufacturing the same, and a rechargeable lithium battery including the same.

A battery, which generates an electric energy through physical or chemical reactions to supply the generated electric energy to the outside, is typically used when no AC power is available to supply to buildings, or when DC power is required for various electric and electronic devices.

Among such batteries, a primary battery and a secondary battery that use a chemical reaction are generally used. The primary battery is typically a consumable battery collectively referred to as a dry battery. In contrast, the secondary battery is typically a rechargeable battery in which oxidation and reduction reactions are repeated at positive and negative electrodes. The secondary battery is charged when a current causes the reduction reaction at the positive electrode, and is discharged when the oxidation reaction is performed at the positive electrode. The secondary battery undergoes repeated charge and discharge cycles.

Lithium composite oxide containing high amounts of nickel has attracted considerable attention as a positive electrode active material of rechargeable lithium batteries. The positive electrode active material has a high energy density. Recently, the trend toward high capacity rechargeable lithium batteries led to the use of bimodal-type positive electrode active materials including a mixture of small particles and large particles having different average particle diameters from each other.

### SUMMARY

An example embodiment of the present disclosure includes a positive electrode active material having improved, advantageous or desired durability for a rechargeable lithium battery.

An example embodiment of the present disclosure includes a rechargeable lithium battery having improved or superior charge-discharge efficiency, improved stability, and increased capacity retention rate.

According to an example embodiment of the present invention, a positive electrode active material may include a first particle that has a first surface and a second surface, the first particle including a lithium composite oxide, and a first coating layer on the first surface. A surface area ratio of the first surface and the second surface may be in a range of about 3:7 to about 8:2. The first coating layer may have a cobalt amount greater than a cobalt amount of the first particle. The cobalt amount of the first coating layer may be in a range of about 30 at% to about 100 at%.

According to an example embodiment of the present invention, a method of manufacturing a positive electrode active material may include synthesizing a first particle that contains a first lithium composite oxide, synthesizing a second particle that contains a second lithium composite oxide, and coating a precursor mixture on a mixture of the first and second particles. The precursor mixture may include a cobalt compound and an aluminium compound. The operation of coating the precursor mixture may be performed at about 650 °C to about 900 °C.

According to an example embodiment of the present invention, a rechargeable lithium battery may include the positive electrode active material discussed above.

At least some of the above and other features of the invention are set out in the claims.

### BRIEF DESCRIPTION OF DRAWINGS

FIG. 1 illustrates a simplified conceptual diagram showing a rechargeable lithium battery, according to some embodiments of the present invention.
FIGS. 2 and 3 illustrate diagrams showing a positive electrode active material, according to some embodiments of the present invention.
FIG. 4 illustrates a flow chart showing a method of manufacturing a positive electrode active material, according to some embodiments of the present invention.
FIGS. 5 and 6 illustrate simplified diagrams showing the method of manufacturing a positive electrode active material of FIG. 4.
FIG. 7 illustrates a simplified cross-sectional view showing a rechargeable lithium battery, according to some embodiments of the present invention.
FIGS. 8A, 8B, and 8C illustrate results of SEM-EDS analysis on first particles of a positive electrode active material of Comparative Example 1.
FIGS. 9A, 9B, and 9C illustrate results of SEM-EDS analysis on first particles of a positive electrode active material of Embodiments 1, 2, and 3, respectively.
FIGS. 9D and 9E illustrate results of SEM-EDS analysis respectively before and after third calcination of a first particle of Example Embodiment 3.
FIGS. 10A and 10B illustrate results of SEM-EDS analysis respectively before and after third calcination of a second particle of Example Embodiment 3.

### DETAILED DESCRIPTION OF EMBODIMENTS

In order to sufficiently understand the configuration and effect of the example disclosure, some example embodiments will be described with reference to the accompanying drawings. It should be noted, however, that the present disclosure is not limited to the following example embodiments, and may be implemented in various forms. Rather, the example embodiments are provided only to disclose the present invention and let those skilled in the art fully know the scope of the present invention.

In this description, it will be understood that, when an element is referred to as being "on" another element, the element can be directly on the other element or intervening elements may be present therebetween. In the drawings, thicknesses of some components are exaggerated for effectively explaining the technical contents. Like reference numerals refer to like elements throughout the specification.

Some example embodiments detailed in this description will be discussed with reference to sectional and/or plan views as example views of the present invention. In the drawings, thicknesses of layers and regions are exaggerated for effectively explaining the technical contents. Accordingly, regions illustrated in the drawings have general properties, and shapes of regions illustrated in the drawings are used to disclose specific shapes, but not limited to the scope of the present invention. It will be understood that, although the terms "first", "second", "third," etc. may be used herein to describe various elements, these elements should not be limited by these terms. These terms are only used to distinguish one element from another element. Example embodiments explained and illustrated herein include complementary embodiments thereof.

The terminology used herein is for the purpose of describing particular embodiments only and is not intended to limit the present invention. As used herein, the singular forms are intended to include the plural forms as well. The terms 'comprises/includes' and/or 'comprising/including' used in the specification do not exclude the presence or addition of one or more other components.

A term "average particle diameter," or D50, used in the present invention may refer to a particle diameter when a volume accumulation percentage corresponds to 50% in particle diameter distribution obtained from a volume of particles. The average particle diameter may be measured by any suitable technique widely used in the art, for example, a particle size analyzer, a transmission electron micrograph, or scanning electron micrograph. Alternatively, an average particle diameter value may be obtained by using a dynamic light scattering method to measure, performing data analysis to count the number of particles for each particle size range, and calculating the average particle diameter from the result. Unless otherwise defined, the average particle diameter may refer to a diameter (D50) of particles having a cumulative volume of 50 vol% in particle size distribution. Alternatively, a particle diameter distribution may be obtained by measuring sizes (diameters or major axis lengths) of about twelve particles randomly selected from a transmission electron microscopic image, and then a diameter (D50) of particles whose cumulative volume is 50 vol% in the particle diameter distribution may be referred to as the average particle diameter unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

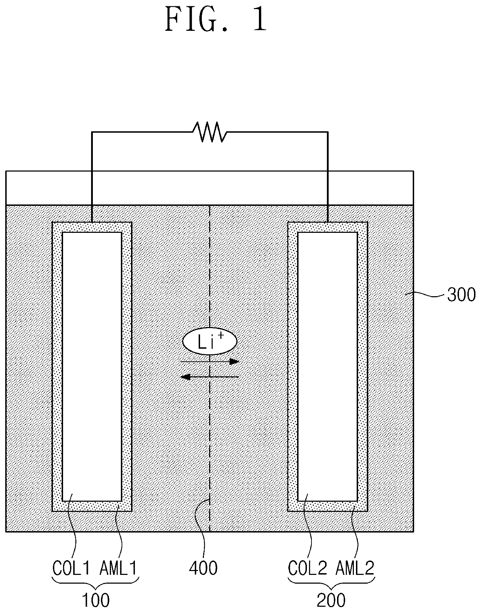

FIG. 1 illustrates a simplified conceptual diagram showing a rechargeable lithium battery according to example embodiments of the present invention. Referring to FIG. 1, a rechargeable lithium battery may include a positive electrode 100, a negative electrode 200, an electrolyte 300, and a separator 400.

The positive electrode 100 and the negative electrode 200 may be spaced apart from each other across the separator 400. The separator 400 may be disposed between the positive electrode 100 and the negative electrode 200. The positive electrode 100, the negative electrode 200, and the separator 400 may be in contact with the electrolyte 300. The positive electrode 100, the negative electrode 200, and the separator 400 may be impregnated in the electrolyte 300.

The electrolyte 300 may be or include a medium through which lithium ions are transmitted between the positive electrode 100 and the negative electrode 200. The lithium ions in the electrolyte 300 may pass through the separator 400 to move between the positive electrode 100 and the negative electrode 200.

The positive electrode 100 may include a first current collector COL1 and a positive electrode active material layer AML1 on the first current collector COL 1. The first current collector COL1 may include metal, such as one or more of aluminium, copper, copper plated with nickel, stainless steels, nickel, titanium, palladium, and aluminium-cadmium alloys. The first current collector COL1 may be shaped like a film, a sheet, a foil, a mesh, a net, a porous substance, a foam, or a non-woven fabric.

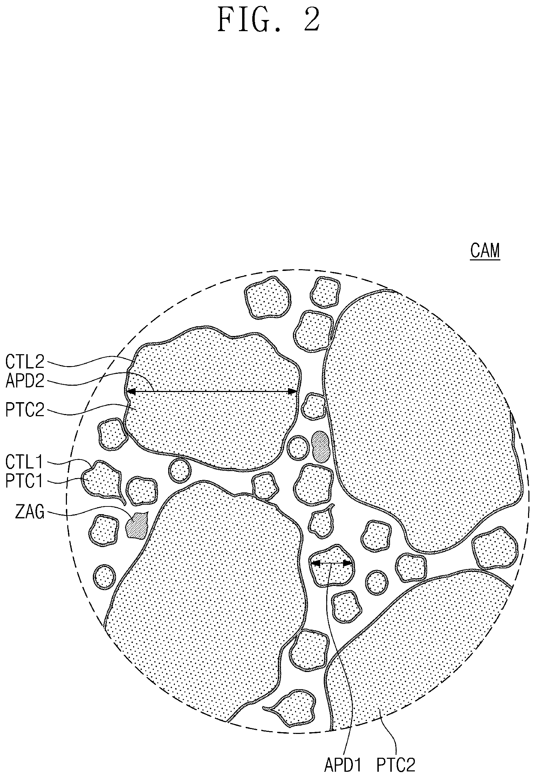

The positive electrode active material layer AML1 may include a binder, a conductive material, and a positive electrode active material. The positive electrode active material may be included in an amount of about 80 wt% to about 99 wt%, for example, about 85 wt% to about 98 wt%, based on the total amount of the positive electrode active material layer AML1. The positive electrode active material may be or include a source of lithium ions. The positive electrode active material may be or include a lithium transition metal oxide, which may include not only lithium but also at least one transition metal. The positive electrode active material according to example embodiments of the present invention will be described in detail with reference to FIG. 2.

The conductive material of the positive electrode active material layer AML1 may provide the positive electrode active material layer AML1 with conductivity. The conductive material may include at least one of carbon-based materials (e.g., graphite, carbon black, acetylene black, Ketjen black, furnace black, lamp black, thermal black, and carbon fiber), metal powders, metal fibers, conductive whiskers, conductive metal oxides, conductive polymers, and any combination thereof. The conductive material may be included in an amount of about 1 wt% to about 30 wt% based on the total weight of the positive electrode active material layer AML1.

The binder of the positive electrode active material layer AML1 may increase a bonding force between the positive electrode active material and the first current collector COL 1. For example, the binder may include at least one of polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylenepropylene-diene monomer (EPDM), a sulfonated EPDM, styrene-butadiene rubber (SBR), fluorine rubber, and any combination thereof. The binder may be included in an amount of about 1 wt% to about 30 wt% based on the total weight of the positive electrode active material layer AML 1.

The negative electrode 200 may include a second current collector COL2 and a negative electrode active material layer AML2 on the second current collector COL2. A description of the second current collector COL2 may be the same as or similar to the above description of the first current collector COL 1. The second current collector COL2 may include a metal that is the same as or different from the metal(s) of the first current collector COL 1. The second current collector COL2 may have a shape that is the same as or different from the shape of the first current collector COL 1.

The negative electrode active material layer AML2 may include a binder, conductive material, and a negative electrode active material. The binder and the conductive material may be the same as those discussed above in the positive electrode active material layer AML 1. The negative electrode active material may be included in an amount of about 80 wt% to about 99 wt%, for example, about 85 wt% to about 98 wt%, based on the total weight of the negative electrode active material layer AML2. The negative electrode active material may include at least one of carbonaceous materials, lithium metal, lithium metal compounds, silicon, silicon compounds, tin, or tin compounds. Metal oxide, such as TiO₂ or SnO₂, whose electrical potential is less than about 2 V may also be used as the negative electrode active material. The carbonaceous material may include one or more of low-crystalline carbon and high-crystalline carbon.

The separator 400 may include a porous polymer film formed of or including a polyolefin-base polymer such as at least one of an ethylene homopolymer, a propylene homopolymer, an ethylene-butene copolymer, an ethylene-hexene copolymer, and an ethylene-methacrylate copolymer. The separator 400 may include a single substance of a porous polymer film or a stack substance of a plurality of porous polymer films. In an example embodiment of the present invention, the separator 400 may include an ordinary porous non-woven fabric, such as, e.g., a high-melting-point glass fiber or a polyethylene terephthalate fiber.

The electrolyte 300 may include a salt having a structure of A⁺B⁻. A⁺ may include at least one alkali metal cation such as at least one of Li⁺, Na⁺, and K⁺. B⁻may include at least one anion such as at least one of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈; (CF₃)₂PF₄⁻, (CF₃)₃PF₃⁻, (CF₃)₄PF₂⁻, (CF₃)₅PF-, (CF₃)₆P-, CF₃SO₃-, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In an example embodiment of the present invention, the electrolyte 300 may be dissolved in an organic solvent for use. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-buturolactone, or any mixture thereof.

A casing commonly used in the art may be adopted as a casing of a rechargeable lithium battery according to example embodiments of the present invention, and there may be no limitation on external appearance in accordance with the use of batteries. For example, the casing of rechargeable lithium batteries may have a cylindrical shape, a prismatic shape, a pouch shape, or a coin shape.

FIG. 2 illustrates a diagram showing a positive electrode active material according to example embodiments of the present invention. Referring to FIG. 2, a positive electrode active material CAM may be provided in the form of powder before being used in the positive electrode active material layer AML1 discussed above with reference to FIG. 1. The positive electrode active material CAM may include a plurality of first particles PTC1, a plurality of second particles PTC2, and a plurality of agglomerates ZAG.

The first particle PTC1 may have a first average particle diameter APD1, and the second particle PTC2 may have a second average particle diameter APD2. The first average particle diameter APD1 may be less than the second average particle diameter APD2. For example, the first average particle diameter APD1 may be in a range of about 1.0 µm to about 5.0 µm. The second average particle diameter APD2 may be in a range of about 10.0 µm to about 25.0 µm. In example embodiments, the first particle PTC1 may be referred to herein as a small particle, and the second particle PTC2 may be referred to herein as a large particle.

The first and second particles PTC1 and PTC2 may have a granular shape, for example, a polyhedral shape, a spherical shape, an oval shape, a plate shape, a rod shape, or an irregular shape. For example, the first and second particles PTC1 and PTC2 may have a polyhedral shape.

In an example embodiment of the present invention, the first particle PTC1 may be shaped like a single particle. In this description, the term "single particle" may mean that one single particle is present alone without a grain boundary inside the particle, and is a monolithic structure in which particles are not aggregated together with one another but present as an independent phase in terms of morphology, and thus may be expressed as a single crystal particle. Alternatively, the single particle may be a particle containing several crystals. The single particle may be provided as a single isolated form, or may include, e.g., less than 10 single particles adhered to each other.

The positive electrode active material CAM according to example embodiments of the present invention may have a bimodal shape including small particles (e.g., PTC1) and large particles (e.g., PTC2) having different average particle diameters. The small particles PTC1 may fill pores between the large particles PTC2, and thus the positive electrode active material CAM may have an increased integration density. For example, the positive electrode active material CAM according to example embodiments of the present invention may have a relatively high energy density per unit volume.

In an example embodiment, the first particle PTC1 and the second particle PTC2 in the positive electrode active material CAM may have a weight ratio of about 5:95 to about 50:50. In another example embodiment, the first particle PTC1 and the second particle PTC2 in the positive electrode active material CAM may have a weight ratio of about 95:5 to about 50:50. For example, in the positive electrode active material CAM, a weight of a second particle PTC2 may be greater than the weight of a first particle PTC1.

The agglomerate ZAG may be included in a space between the first and second particles PTC1 and PTC2. The agglomerate ZAG may be originated from a coating agent which will be discussed below. The agglomerate ZAG may include at least one of cobalt (Co) and aluminium (Al). For example, the agglomerate ZAG may be or include a cluster formed by agglomeration of a portion of a coating agent that is not coated on the surfaces of the first and second particles PTC1 and PTC2. In an example embodiment of the present invention, the agglomerate ZAG may be omitted.

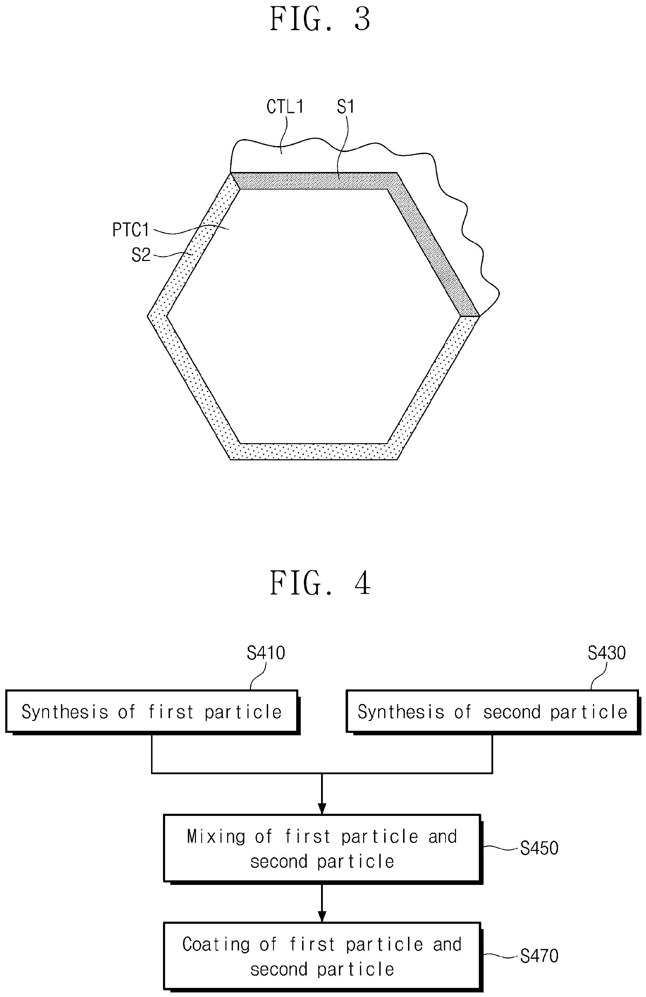

FIG. 3 illustrates a simplified diagram showing a positive electrode active material according to example embodiments of the present invention.

Referring to FIG. 3, a positive electrode active material CAM according to an example embodiment of the present invention may include a first particle PTC1 and a first coating layer CTL1.

The first particle PTC1 may include, e.g., a lithium composite oxide. The lithium composite oxide may include, e.g., nickel (Ni). There may be no limitation on an amount of nickel (Ni). An amount of nickel (Ni) may be defined to refer to a molar ratio of nickel with respect to the total mole number of a metal (e.g. transition metal) excluding lithium. The lithium composite oxide may further include at least one of cobalt (Co), aluminium (Al), manganese (Mn), sodium (Na), magnesium (Mg), calcium (Ca), yttrium (Y), titanium (Ti), hafnium (Hf), vanadium (V), niobium (Nb), tantalum (Ta), chromium (Cr), molybdenum (Mo), tungsten (W), iron (Fe), copper (Cu), silver (Ag), zinc (Zn), boron (B), gallium (Ga), carbon (C), silicon (Si), and tin (Sn). For example, the lithium composite oxide may include cobalt (Co). For example, the lithium composite oxide may include cobalt (Co) and manganese (Mn). For example, the lithium composite oxide may further include a small amount of aluminium (Al).

In an example embodiment of the present invention, the first particle PTC1 may include a high-nickel lithium composite oxide. For example, the high-nickel lithium composite oxide may be or include a layered lithium composite oxide with an amount of nickel (Ni) that is equal to or greater than 60%.

For example, the first particle PTC1 may include a first lithium composite oxide. The first lithium composite oxide may be expressed by Chemical Formula 1 below.

[Chemical Formula 1] Liₐ₁Niₓ₁Ma₁₋ₓ₁O_{b1}

In Chemical Formula 1, a1 may be about 0.5 to 1.5, x1 may be about 0.6 to 0.99, b1 may be about 1.8 to 2.2, 1-x1 may be about 0.01 to 0.4, and Ma may include at least one of Co, Al, Mn, Na, Mg, Ca, Y, Ti, Hf, V, Nb, Ta, Cr, Mo, W, Fe, Cu, Ag, Zn, B, Ga, C, Si, and Sn. In an example embodiment, Ma may include at least one of Co, Al, and Mn.

In an example embodiment of the present invention, x1 or a molar ratio of Ni in Chemical Formula 1 may be greater than about 0.8. When the first lithium composite oxide has a composition having a high amount of Ni (e.g., x1>0.8), the first lithium composite oxide may be calcined at a relatively low temperature. Ni in the first lithium composite oxide may affect power and capacity of a rechargeable lithium battery. In examples of the disclosure, the first lithium composite oxide having a high-nickel composition may be used to provide a high-power rechargeable lithium battery.

In an example embodiment of the present invention, the first particle PTC1 may have a nickel (Ni) amount of less than about 60%.

For example, the first lithium composite oxide may be expressed by Chemical Formula 1-1 below.

[Chemical Formula 1-1] Liₐ₁Niₓ₁Ma₁₋ₓ₁O_{b1}

In Chemical Formula 1-1, a1 may be about 0.5 to 1.5, x1 may be about 0.01 to less than 0.6, b1 may be about 1.8 to 2.2, 1-x1 may be greater than about 0.4 to 0.99, and Ma may include at least one of Co, Al, Mn, Na, Mg, Ca, Y, Ti, Hf, V, Nb, Ta, Cr, Mo, W, Fe, Cu, Ag, Zn, B, Ga, C, Si, and Sn. In an example embodiment, Ma may include at least one of Co, Al, and Mn.

According to example embodiments of the present invention, the first particle PTC1 may be crystalline, for example, monocrystalline. The first particle PTC1 may have one crystal direction. The first particle PTC1 may consist of or include regularly arranged atoms composing particles. A crystal structure may have a repeated unit lattice. The unit lattice may have axis vectors (a-axis, b-axis, and c-axis). The c-axis may be a movement direction of lithium ions.

The first particle PTC1 may have a first surface S 1 and a second surface S2. The first surface S 1 may be a surface through which the c-axis penetrates. The first surface S 1 may be a surface through which lithium ions enter the first particle PTC1 or escape from the first particle PTC1.

The first coating layer CTL1 may be formed on the first surface S 1. The first coating layer CTL1 may be formed on a portion of a surface of the first particle PTC1. The first coating layer CTL1 may have an island shape. The first coating layer CTL1 may not be detected through an electron microscope image. The first coating layer CTL1 may be detected through an amount of cobalt (Co), which is analyzed by Scanning Electron Microscopy - Energy Dispersive Spectroscopy (SEM-EDS), on the surface of the first particle PTC1.

An amount of cobalt (Co) of the first coating layer CTL1 may be greater than an amount of cobalt (Co) within the first particle PTC1. In an example embodiment, cobalt (Co) of the first coating layer CTL1 may have an amount of about 30 at% to about 100 at%, and cobalt (Co) within the first particle PTC1 may have an amount of less than about 30 at%. For example, cobalt (Co) of the first coating layer CTL1 may have an amount of about 30 at% to about 99.95 at%, and cobalt (Co) within the first particle PTC1 may have an amount of about 2 at% to about 15 at%.

The first coating layer CTL1 may have an unevenly structured surface. A surface roughness of the first coating layer CTL1 may be greater than a surface roughness of the second surface S2. The unevenly structured surface of the first coating layer CTL 1 may increase a surface area of the positive electrode active material CAM. Therefore, the charge/discharge efficiency of the battery may be increased.

An amount of nickel (Ni) of the first coating layer CTL1 may be less than the amount of nickel (Ni) within the first particle PTC1. A ratio of the amount of Ni to the amounts of Ni and Co may be less in the first coating layer CTL1 than in the first lithium composite oxide. For example, the ratio of the amount of Ni to the amounts of Ni and Co of the first coating layer CTL1 may range from about 0% to about 60% or about 40% to about 60%. The ratio of the amount of Ni to the amounts of Ni and Co of the first lithium composite oxide may range from about 60% to about 99% or about 80% to about 98%. When the ratio of the amount of Ni to the amounts of Ni and Co satisfies the range above, it may be possible to achieve desired lifetime characteristics.

The first coating layer CTL1 may further include aluminium (Al). According to an example embodiment of the present invention, in the first coating layer CTL1, a cobalt (Co) site determined by EDS mapping analysis may overlap an aluminium (Al) site determined by EDS mapping analysis. For example, the first coating layer CTL1 may have a uniform composition of cobalt (Co) and aluminium (Al). Aluminium (Al) of the first coating layer CTL1 may increase a battery lifetime while maintaining a battery capacity.

An atomic molar ratio of cobalt (Co) and aluminium (Al) of the first coating layer CTL1 may range, for example, from about 2:0.05 to about 2: 1 or about 2:0.1 to about 2:0.3. When the atomic molar ratio of cobalt (Co) and aluminium (Al) satisfies any of the above ranges, batteries including the positive electrode active material (CAM) may maintain their capacity and increase their lifetime without increasing the resistance of the positive electrode active material (CAM).

The second surface S2 may be a surface except for the first surface S1 of the first particle PTC1. The first coating layer CTL1 may not be formed on the second surface S2. At least one of cobalt (Co), nickel (Ni), and aluminium (Al) of the second surface S2 may have an amount in a range that deviates from the ranges described above. The content of cobalt (Co), nickel (Ni), and aluminium (Al) of the second surface S2 may be substantially the same or similar to the content of cobalt (Co), nickel (Ni), and aluminium (Al) within the first particle PTC1.

A ratio of the amount of Ni to the amounts of Ni and Co of the second surface S2 may range from about 60% to about 99% or about 80% to about 98%. When the ratio of the amount of Ni to the amounts of Ni and Co satisfies any of the ranges above, it may be possible to achieve desired lifetime characteristics.

A surface area ratio of the first surface S1 and the second surface S2 may range from about 3:7 to about 8:2. The first coating layer CTL1 may be specified from an amount of each, or at least one, of cobalt (Co), nickel (Ni), and aluminium (Al) measured from results of SEM-EDS. It may thus be possible to specify a region of each, or at least one, of the first surface S1 on which the first coating layer CTL1 is formed, and the second surface S2 on which the first coating layer CTL1 is not formed. Each of the first surface S 1 and the second surface S2 may refer to a region extending approximately 300 nm deep from an outer surface of the first particle PTC1. The surface area ratio of the first surface S 1 and the second surface S2 may be calculated as a ratio of the area of a specified first surface S 1 and the area of a specified second surface S2. When the surface area ratio of the first surface S 1 and the second surface S2 satisfies the range above, it may be possible to reduce or prevent collapse of the positive electrode active material CAM, and to achieve desired lifetime characteristics.

The positive electrode active material CAM according to an example embodiment of the present invention may further include a second particle PTC2 and a second coating layer CTL2.

As discussed above, the second particle PTC2 may have an average particle diameter that is greater than that of the first particle PTC1.

The second particle PTC2 may be shaped like a second particle in which a plurality of primary particles are aggregated.

The second particle PTC2 may be or include a polycrystalline particle. The second particle PTC2 may be or include an aggregate of a plurality of monocrystalline particles.

The second particle PTC2 may include lithium composite oxide. In an example embodiment, the lithium composite oxide may include nickel (Ni). There may be no limitation on an amount of nickel (Ni). An amount of nickel (Ni) may refer to a molar ratio of nickel with respect to the total mole number of metal (e.g. transition metal) excluding lithium. The lithium composite oxide may further include at least one of cobalt (Co), aluminium (Al), manganese (Mn), sodium (Na), magnesium (Mg), calcium (Ca), yttrium (Y), titanium (Ti), hafnium (Hf), vanadium (V), niobium (Nb), tantalum (Ta), chromium (Cr), molybdenum (Mo), tungsten (W), iron (Fe), copper (Cu), silver (Ag), zinc (Zn), boron (B), gallium (Ga), carbon (C), silicon (Si), and tin (Sn). For example, the lithium composite oxide may include cobalt (Co). For example, the lithium composite oxide may include cobalt (Co) and manganese (Mn). For example, the lithium composite oxide may further include a small amount of aluminium (Al).

In an example embodiment of the present invention, the second particle PTC2 may include a high-nickel lithium composite oxide. For example, the high-nickel lithium composite oxide may be or include a layered lithium composite oxide with an amount of nickel (Ni) that is equal to or greater than 60%.

For example, the second particle PTC2 may include a second lithium composite oxide. The second lithium composite oxide may be expressed by Chemical Formula 2 below.

[Chemical Formula 2] Liₐ₂Niₓ₂Mb₁₋ₓ₂O_{b2}

In Chemical Formula 2, a2 may be about 0.5 to 1.5, x2 may be about 0.6 to 0.99, b2 may be about 1.8 to 2.2, 1-x2 may be about 0.01 to 0.4, and Mb may include at least one of Co, Al, Mn, Na, Mg, Ca, Y, Ti, Hf, V, Nb, Ta, Cr, Mo, W, Fe, Cu, Ag, Zn, B, Ga, C, Si, and Sn. In an example embodiment, Mb may include at least one of Co, Al, and Mn. In the present invention, a transition metal may be included, as well as a post-transition metal such as Al.

In an example embodiment of the present invention, x2 or a molar ratio of Ni may also be greater than about 0.8. However, x2 may be different from x1 discussed above.

A composition ratio of Mb of the second lithium composite oxide and elements included in the second lithium composite oxide may be different from a composition ratio of Ma of the first lithium composite oxide and elements included in the first lithium composite oxide. For example, Mb of the second lithium composite oxide may include Co and Al, and Ma of the first lithium composite oxide may include Co and Mn. For another example, each, or one or more, of Ma and Mb may include Co, Al, and Mn. A composition ratio of Al in Mb may be greater than a composition ratio of A1 in Ma, and a composition ratio of Mn in Mb may be less than a composition ratio of Mn in Ma.

The first and second lithium composite oxides may further include Co in addition to Ni. The first and second lithium composite oxides may also further include Al. Therefore, a rechargeable lithium battery may improve in stability and capacity retention characteristics.

In another example embodiment of the present invention, the second particle PTC2 may have a nickel (Ni) amount that is less than about 60%.

For example, the second lithium composite oxide may be expressed by Chemical Formula 2-1 below.

[Chemical Formula 2-1] Liₐ₂Niₓ₂Mb₁₋ₓ₂O_{b2}

In Chemical Formula 2-1, a2 may be about 0.5 to 1.5, x2 may be about 0.01 to less than 0.6, b2 may be about 1.8 to 2.2, 1-x2 may be greater than about 0.4 to 0.99, and Mb may include at least one of Co, Al, Mn, Na, Mg, Ca, Y, Ti, Hf, V, Nb, Ta, Cr, Mo, W, Fe, Cu, Ag, Zn, B, Ga, C, Si, and Sn. In an example embodiment, Mb may include Co, Al, and Mn.

The second coating layer CTL2 may be formed on a surface of the second particle PTC2. The second coating layer CTL2 may be formed on an entire surface of the second particle PTC2. The second coating layer CTL2 may uniformly or non-uniformly cover the surface of the second particle PTC2. When the second coating layer CTL2 non-uniformly covers the surface of the second particle PTC2, the second coating layer CTL2 may have an island shape. The second coating layer CTL2 may not be ascertained through an electron microscope image. The second coating layer CTL2 may be ascertained through the presence of cobalt (Co) which is analyzed by SEM-EDS.

An amount of cobalt (Co) of the second coating layer CTL2 may be greater than the amount of cobalt (Co) within the second particle PTC2. In an example embodiment, cobalt (Co) of the second coating layer CTL2 may be in an amount of about 30 at% to about 100 at%, and cobalt (Co) within the second particle PTC2 may be in an amount of less than about 30 at%. For example, cobalt (Co) of the second coating layer CTL2 may be in an amount of about 30 at% to about 99.95 at%, and cobalt (Co) within the second particle PTC2 may be in an amount of about 2 at% to about 15 at%. Likewise the first coating layer CTL1, the second coating layer CTL2 may have an unevenly structured surface.

An amount of nickel (Ni) of the second coating layer CTL2 may be less than an amount of nickel (Ni) within the second particle PTC2. For example, a ratio of the amount of Ni to the amounts of Ni and Co may be less in the second coating layer CTL2 than in the second lithium composite oxide. For example, a ratio of the amount of Ni to the amounts of Ni and Co of the second coating layer CTL2 may range from about 0% to about 60% or about 40% to about 60%. The ratio of the amount of Ni to the amounts of Ni and Co of the second lithium composite oxide may range from about 60% to about 99% or about 80% to about 98%. When the ratio of the amount of Ni to the amounts of Ni and Co satisfies the range above, it may be possible to achieve desired lifetime characteristics.

In an example embodiment of the present invention, the second coating layer CTL2 may include at least one of cobalt (Co) and aluminium (Al). An atomic molar ratio of cobalt (Co) and aluminium (Al) of the second coating layer CTL2 may range, for example, from about 2:0.05 to about 2:1 or about 2:0.1 to about 2:0.3. The atomic molar ratio of cobalt (Co) and aluminium (Al) of the second coating layer CTL2 may be the same as or different from the atomic molar ratio of cobalt (Co) and aluminium (Al) of the first coating layer CTL1.

A term "amount of cobalt (C)" and "atomic molar ratio of aluminium (Al)" used in this description may be obtained from results of analysis on elements of a surface of the positive electrode active material CAM by using energy dispersive spectroscopy (EDS) or scanning electron microscope-energy dispersive spectroscopy (SEM-EDS). Elements on the surface of the positive electrode active material CAM collided with an electron beam may emit a characteristic X-ray. The emitted X-ray may be analyzed through an EDX detector to ascertain a kind and amount of a corresponding element.

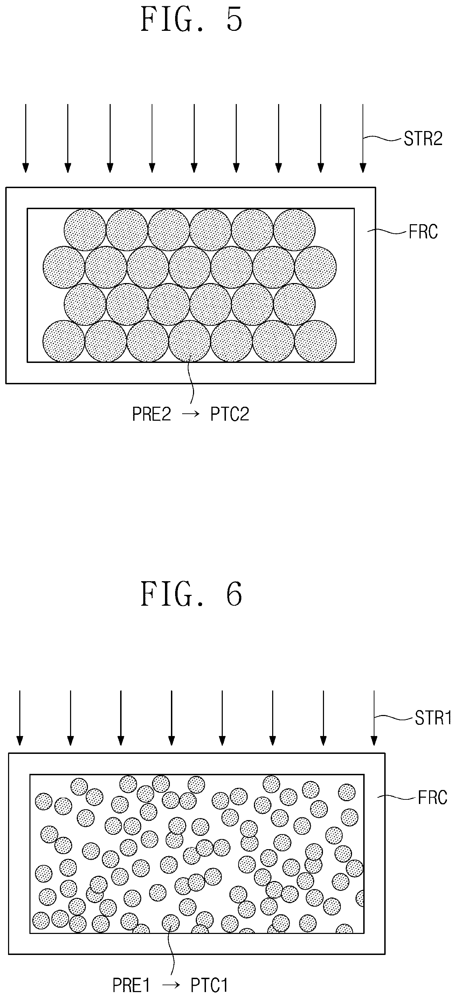

FIG. 4 illustrates a flow chart showing a method of manufacturing a positive electrode active material, according to some embodiments of the present invention. FIGS. 5 and 6 illustrate simplified diagrams showing a method of manufacturing a positive electrode active material of FIG. 4.

Referring to FIGS. 4 and 5, a second particle PTC2 may be synthesized (S430). The following will describe in detail a method of synthesizing the second particle PTC2. First, the second precursor PRE2 may be prepared. The second precursor PRE2 may include Ni and Mb of Chemical Formula 2 discussed above. Mb may include at least one of Co, Al, Mn, Na, Mg, Ca, Y, Ti, Hf, V, Nb, Ta, Cr, Mo, W, Fe, Cu, Ag, Zn, B, Ga, C, Si, and Sn. For example, Mb may include at least one of Co, Mn, and Al.

In an example embodiment, the second precursor PRE2 may be obtained through a coprecipitation method. For example, the coprecipitation method may include dissolving a raw material of transition metal in a solvent such as distilled water, and causing precipitation by continuously providing a reactor with a transition metal salt solution along with a chelating agent and an alkaline aqueous solution. A precipitate may be collected in the form of slurry, and then a slurry solution may be filtered and dried to obtain a metal composite oxide or the second precursor PRE2.

In examples of the present invention, the raw material of transition metal may include a metal salt of at least one of Ni, Co, Al, Mn, Na, Mg, Ca, Y, Ti, Hf, V, Nb, Ta, Cr, Mo, W, Fe, Cu, Ag, Zn, B, Ga, C, Si, and Sn. The metal salt may include at least one of sulfate, nitrate, acetate, halide, or hydroxide, and there is no particular limitation as long as a material can be dissolved in a solvent. The raw material of transition metal according to an example embodiment may include at least one of nickel salt, cobalt salt, and aluminium salt. The raw material of transition metal may be mixed by adjusting a molar ratio to allow a positive electrode active material to have high capacity properties. For example, the molar ratio may determine x2 of Chemical Formula 2.

The second precursor PRE2 and a lithium raw material may be mixed in a certain ratio to form a mixture. For example, the second precursor PRE2 and the lithium raw material may be mixed in a molar ratio of about 1: 1. The lithium raw material may be used without particular limitation as long as it is commonly used in fabrication of positive electrode active materials. For example, the lithium raw material may include at least one of a lithium salt, such as lithium carbonate, lithium nitrate, lithium hydroxide, or lithium sulfate.

The mixture may be added into a furnace FRC and a second calcination process STR2 may be performed at a second temperature. The second temperature may range from about 700 °C to about 1,000 °C. For example, the second temperature may range from about 700 °C to about 800 °C. The second calcination process STR2 may be performed in an oxidizing atmosphere such as air or oxygen. In the second calcination process STR2, a heat treatment duration may range from about 10 hours to about 30 hours. In another example embodiment of the present invention, before the second calcination process STR2, a pre-calcination process may be additionally performed at about 150 °C to about 800 °C.

In the second calcination process STR2, the second particle PTC2 may be formed from the mixture including the second precursor PRE2 and the lithium raw material. In another example embodiment of the present invention, a grinding process may be performed on the synthesized second particle PTC2. The grinded second particle PTC2 may have the second average particle diameter APD2 discussed in FIG. 2.

Referring to FIGS. 4 and 6, a first particle PTC1 may be synthesized (S410). The following will describe in detail a method of synthesizing the first particle PTC1. First, a first precursor PRE1 may be prepared. The first precursor PRE1 may include Ni and Ma of Chemical Formula 1 discussed above. Ma may include at least one of Co, Al, Mn, Na, Mg, Ca, Y, Ti, Hf, V, Nb, Ta, Cr, Mo, W, Fe, Cu, Ag, Zn, B, Ga, C, Si, and Sn. For example, Ma may include at least one of Co, Mn, and Al.

In an example embodiment, the first precursor PRE1 may be obtained by a method substantially the same as or similar to the method used for obtaining the second precursor PRE2. However, the first precursor PRE1 may be formed to have an average particle diameter that is less than the average particle diameter of the second precursor PRE2.

The first precursor PRE1 and a lithium raw material may be mixed in a desired ratio to form a mixture. The mixture may be added into a furnace FRC and a first calcination process STR1 may be performed at a first temperature. The first temperature may range from about 700 °C to about 1,000 °C. For example, the first temperature may range from about 800 °C to about 950 °C. The first temperature may be greater than the second temperature discussed above with respect to FIG. 5. In the first calcination process STR1, a heat treatment duration may be in a range of about 5 hours to about 15 hours. Other descriptions of the first calcination process STR1 may be the same as or similar to the description of the second calcination process STR2.

In the first calcination process STR1, the first particle PTC1 may be formed from a mixture including the first precursor PRE1 and a lithium raw material. A grinding process may be performed on the synthesized first particle PTC1. The grinded first particle PTC1 may have the first average particle diameter APD1 discussed in FIG. 2.

Referring to FIG. 4, the first particle PTC1 and the second particle PTC2 may be mixed with each other (S450). In an example embodiment, the first particle PTC1 and the second particle PTC2 may be mixed in a weight ratio of about 95:5 to about 50:50. In another example embodiment, the first particle PTC1 and the second particle PTC2 may be mixed in a weight ratio of about 5:95 to about 50:50. As the first particle PTC1 is mixed with the second particle PTC2 that has an average particle diameter that is different from the average particle diameter of the first particle PTC1, there may be prepared a positive electrode active material having a bimodal shape. The first and second particles PTC1 and PTC2 may be cleaned and dried.

Referring still to FIG. 4, a coating process may be performed on the first and second particles PTC1 and PTC2 (S470). The coating process may include coating surfaces of the first and second particles PTC1 and PTC2 with cobalt (Co) and aluminium (Al).

For example, the first and second particles PTC1 and PTC2 may be mixed with a coating raw material. The coating raw material may be or include a mixture of a cobalt compound an aluminium compound. For example, the cobalt compound may include at least one of cobalt nitrate, cobalt sulfate, or cobalt oxide, but the present invention is not particularly limited thereto. For example, the aluminium compound may include aluminium sulfate (Al₂(SO₄)₃) or sodium aluminate (NaAlO₂), but the present invention is not particularly limited thereto.

The first and second particles PTC1 and PTC2 and the coating raw material may be added and mixed in a solvent (e.g., distilled water). The first and second particles PTC1 and PTC2 and the coating raw material may be uniformly, or substantially uniformly, mixed in an agitator. In this process, an alkali may be added for deposition. The alkali may include at least one of sodium hydroxide (NaOH), lithium hydroxide (LiOH), potassium hydroxide (KOH), and ammonia (NH₃), but the present invention is not particularly limited thereto. Afterwards, the first and second particles PTC1 and PTC2 may be filtered and dried, and then a surface treatment may be performed on the first and second particles PTC1 and PTC2. The surface treatment may include performing a heat treatment process in an oxidizing atmosphere such as, e.g., air or oxygen. The surface treatment may be performed at a temperature of about 500 °C to about 800 °C.

In another example embodiment of the present invention, the coating process may include a dry coating process. For example, the mixture of the first and second particles PTC1 and PTC2 and the coating raw material may be added and agitated without a solvent in a dry coating apparatus. The surface treatment may be performed on an obtained dry mixture.

The heat treatment process may be performed in such a way that the mixture of the first and second particles PTC1 and PTC2 and the coating raw material are added to a furnace FRC, and a third calcination process is performed at a third temperature. The third temperature may range from about 650 °C to about 1,000 °C. For example, the third temperature may range from about 650 °C to about 900 °C or from about 650 °C to about 800 °C. When the third temperature satisfies the range above, cobalt (Co) may be disposed on a coating layer on a particle surface, and desired cell capacity and charge/discharge efficiency may be accomplished. The description of the third calcination process may be the same as or similar to the description of the first calcination process STR1.

It may therefore be possible to manufacture the positive electrode active material CAM discussed with reference to FIG. 2 and FIG. 3 according to example embodiments of the present invention.

The positive electrode 100 of FIG. 1 may be manufactured by an ordinary method of manufacturing a positive electrode, except for the use of the positive electrode active material CAM according to some example embodiments of the present invention. For example, a binder, a conductive material, and the positive electrode active material CAM of the example embodiments may be dissolved or dispersed in a solvent, thereby prepare a mixture. The binder and the conductive material may be the same as those discussed above in the positive electrode active material layer AML1 of FIG. 1. The mixture may be coated on the first current collector COL1, and then may be dried and pressed to manufacture the positive electrode 100.

The solvent may be a commonly used material in the art, for example, may include at least one of dimethyl sulfoxide (DMSO), isopropyl alcohol, N-methyl pyrrolidone (NMP), acetone, water, and a combination thereof.

In another example embodiment, the mixture may be cast on a desired support to prepare a film or the positive electrode active material layer AML1. The positive electrode 100 may be manufactured by laminating the positive electrode active material layer AML 1 on the first current collector COL 1.

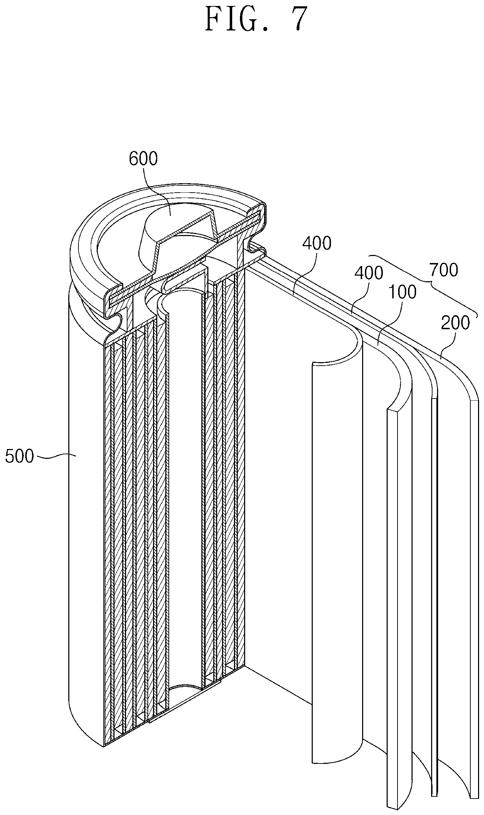

FIG. 7 illustrates a simplified cross-sectional view showing a rechargeable lithium battery according to some example embodiments of the present invention. Referring to FIG. 7, a rechargeable lithium battery may include a positive electrode 100, a negative electrode 200, and a separator 400. A description of the positive electrode 100, the negative electrode 200, and the separator 400 of FIG. 7 may be substantially the same as the descriptions discussed above in the rechargeable lithium battery of FIG. 1.

The positive electrode 100, the negative electrode 200, and the separator 400 of FIG. 7 may be winded or folded to constitute an electrode assembly 700. The electrode assembly 700 may be accommodated in a battery casing 500. The electrode assembly 700 may include a plurality of electrode assemblies. The separator 400 may be provided between the electrode assemblies. The battery casing 500 may be provided therein with the electrode assemblies that are sequentially stacked. The battery casing 500 may be filled with an electrolyte (see 300 of FIG. 1). The battery casing 500 may be sealed by a cap assembly 600. The battery casing 500 according to some example embodiments of the present invention may have a cylindrical shape, a prismatic shape, or a pouch shape. A rechargeable lithium battery according to some example embodiments of the present invention may be used in apparatuses such as, e.g., laptop computers, smart phones, or electric vehicles.

Herein, the present invention will be described in detail with reference to some example Embodiments. The following example Embodiments are provided for illustrative purpose only and are not to be construed to limit the scope of the present invention.

### Example Embodiment 1

### Preparation 1: Preparation of Large-Particle Precursor

A coprecipitation method was used to prepare a large-particle precursor. A subsequently described procedure was employed to form nickel-based metal hydroxide (Ni_{0.96}Co_{0.02}Mn_{0.02}(OH)₂) as the large-particle precursor.

Nickel sulfate (NiSO₄·6H₂O), cobalt sulfate (CoSO₄·7H₂O), and manganese sulfate (MnSO₄·H₂O) in a molar ratio of 96:2:2 as a raw material of nickel-based metal hydroxide were dissolved in distilled water as a solvent, thereby preparing a metal raw material mixture solution. An ammonia water (NH₄OH) dilute solution and sodium hydroxide (NaOH) as a precipitant were prepared to form a complex compound. Afterwards, the metal raw material mixture solution, the ammonia water, and the sodium hydroxide were added into a reactor. Sodium hydroxide was added into the reactor to maintain pH of the mixture in the reactor. A reaction was performed for about 20 hours while the mixture was agitated in the reactor.

A slurry solution in the reactor was filtered and washed with high-purity distilled water. The washed material was dried in a hot-air oven at 750 °C for 24 hours to obtain powder of the large-particle precursor (Ni_{0.96}Co_{0.02}Mn_{0.02}OH) whose particle size was about 18 µm.

### Preparation 2: Preparation of Small-Particle Precursor

A coprecipitation method was used to prepare a small-particle precursor. A subsequently described procedure was employed to form nickel-based metal hydroxide (Ni_{0.90}Co_{0.02}Mn_{0.02}(OH)₂) as the small-particle precursor.

Nickel sulfate (NiSO₄·6H₂O), cobalt sulfate (CoSO₄·7H₂O), and manganese sulfate (MnSO₄·H₂O) in a molar ratio of 96:2:2 as a raw material of nickel-based metal hydroxide were dissolved in distilled water as a solvent, thereby preparing a metal raw material mixture solution. The metal raw material mixture solution, ammonia water, and sodium hydroxide were added and reacted in a reactor.

A slurry solution in the reactor was filtered and washed with high-purity distilled water. The washed material was dried in a hot-air oven at 210 °C for 24 hours to obtain powder of the small-particle precursor (Ni_{0.96}Co_{0.02}Mn_{0.02}(OH)₂) whose particle size was about 3 µm.

### Preparation 3: Preparation of Large-Particle Lithium Composite Oxide

The large-particle precursor of Preparation 1 and anhydrous lithium hydroxide (LiOH) were dry-mixed with Henschel Mixer. Lithium and transition metal were mixed in a molar ratio of about 1: 1. The transition metal was a total sum (Ni+Co+Mn) of transition metals contained in the large-particle precursor. The mixture was thermally heated (or a second calcination process) in an oxygen atmosphere at about 750 °C for 15 hours to synthesize a second particle as a second lithium composite oxide. The second particle was grinded with Jet Mill under a pressure of 3 bars.

### Preparation 4: Preparation of Small-Particle Lithium Composite Oxide

The small-particle precursor of Preparation 2 and anhydrous lithium hydroxide (LiOH) were dry-mixed with Henschel Mixer. Lithium and transition metal were mixed in a molar ratio of about 1: 1. The transition metal is a total sum (Ni+Co+Mn) of transition metals contained in the small-particle precursor. The mixture was thermally heated (or a first calcination process) in an oxygen atmosphere at about 910°C for 8 hours to synthesize a first particle as a first lithium composite oxide. The first particle was grinded with Jet Mill under a pressure of 3 bars.

### Preparation 5: Preparation of Bimodal Particle

The second particle (Preparation 3) having an average particle diameter of 18 µm and the first particle (Preparation 4) having an average particle diameter of 3 µm were mixed in a weight ratio of 70:30 to prepare a bimodal particle. The bimodal particle was added and washed with distilled water. A precursor mixture was mixed with the bimodal particle to perform cobalt and aluminium coating processes. The precursor mixture was formed of a solution including a cobalt compound and a sodium hydroxide solution including an aluminium compound. The precursor mixture included cobalt sulfate (CoSO₄·7H₂O) and aluminum sulfate (Al₂(SO₄)₃) such that the molar amount cobalt is 2 mol% and the molar amount of aluminum is 0.1 mol%, relative to the total sum of transition metals of the bimodal particle. Table 1 below lists the amount of cobalt atoms and the amount of aluminium atoms. Afterwards, the solution was filtered and dried, and then 5 mol% lithium hydroxide (LiOH) was mixed with the solution. About 2 mol% lithium hydroxide was added for cobalt (Co) coating. The mixture was thermally treated (or a third calcination process) in an oxygen atmosphere at about 700°C for 15 hours to execute cobalt (Co) and aluminium (Al) coating. A positive electrode active material according to the present embodiment was therefore obtained.

### Preparation 6: Fabrication of Rechargeable Lithium Battery

96 grams of the positive electrode active material of Preparation 5, 2 grams of polyvinylidene fluoride, 47 grams of N-methyl pyrrolidone as a solvent, and 2 grams of carbon black as a conductive material were mixed to prepare an active material slurry.

A doctor blade was used to coat an aluminium film with the active material slurry to form a thin electrode plate. The electrode plate was dried at 135 °C for 3 hours or more, and then compressed and vacuum dried to manufacture a positive electrode.

The positive electrode and a lithium metal counter electrode were used to fabricate a 2032-type coin cell. A separator (having a thickness of about 16 µm) formed of a porous polyethylene (PE) film was interposed between the positive electrode and the lithium metal counter electrode. An electrolyte was introduced to fabricate the 2032-type coin cell. The electrolyte was a solution in which 1.1 M LiPF₆ was dissolved in a solvent including ethylene carbonate (EC) and ethylmethyl carbonate (EMC) mixed in a volume ratio of 3:5.

### Example Embodiment 2

A rechargeable lithium battery was fabricated by the same method as that of Example Embodiment 1, with a difference that aluminium sulfate (Al₂(SO₄)₃) was added such that the molar amount of aluminum is about 0.5 mol% relative to the total sum of transition metals of the bimodal particle in Preparation 5 instead of 0.1 mol% of aluminium.

### Example Embodiment 3

A rechargeable lithium battery was fabricated by the same method as that of Example Embodiment 1, with a difference that aluminium sulfate (Al₂(SO₄)₃) was added such that the molar amount of aluminum is about 1.0 mol% relative to the total sum of transition metals of the bimodal particle in Preparation 5 instead of 0.1 mol% of aluminium.

### Comparative Example 1

A rechargeable lithium battery was fabricated by the same method as that of Example Embodiment 1, with a difference that aluminium sulfate (Al₂(SO₄)₃) was not added in Preparation 5.

### Comparative Example 2

A rechargeable lithium battery was fabricated by the same method as that of Example Embodiment 1, with a difference that no cobalt sulfate was added and that about 3 mol% of lithium hydroxide was added and that aluminium sulfate (Al₂(SO₄)₃) was added such that the molar amount of aluminum is about 0.5 mol% relative to the total sum of transition metals of the bimodal particle in Preparation 5.

### Comparative Example 3

A positive electrode active material was prepared by the same method as that of Example Embodiment 1, with a difference that neither cobalt sulfate nor aluminium sulfate was added and that about 3 mol% of lithium hydroxide was added in Preparation 5.

### Comparative Example 4

A rechargeable lithium battery was fabricated by the same method as that of Example Embodiment 1, with a difference that about 2 mol% of aluminium sulfate (Al₂(SO₄)₃) was added such that the molar amount of aluminum is about 2.0 mol% relative to the total sum of transition metals of the bimodal particle in Preparation 5 instead of 0.1 mol% of aluminium.

**[Table 1]**

| Category | Co amount (mol%) | Al amount (mol%) |
|---|---|---|
| Example Embodiment 1 | 2 | 0.1 |
| Example Embodiment 2 | 2 | 0.5 |
| Example Embodiment 3 | 2 | 1.0 |
| Comparative Example 1 | 2 | 0 |
| Comparative Example 2 | 0 | 0.5 |
| Comparative Example 3 | 0 | 0 |
| Comparative Example 4 | 2 | 2 |

### Experimental Example 1: Analysis on Structure and Element of Positive Electrode Active Material (SEM-EDS)

The positive electrode active material manufactured in Example Embodiment 1 was captured with a scanning electron microscope (SEM) to perform energy dispersive X-ray spectroscopy (EDS). Thus, an element on the surface of the first particle PTC1 (small particle) was analyzed, and an element on the surface of the second particle PTC2 (large particle) was analyzed. The positive electrode active materials manufactured in Embodiments 2 and 3 and Comparative Example 1 were analyzed with SEM-EDS analysis at the same condition.

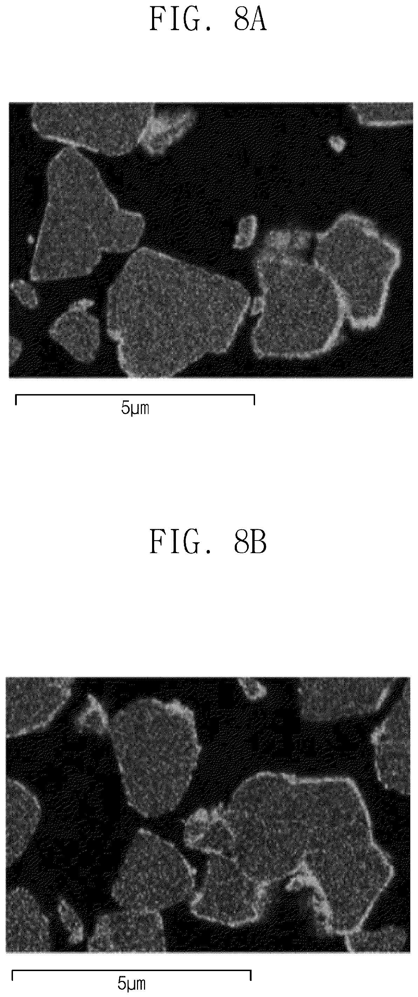

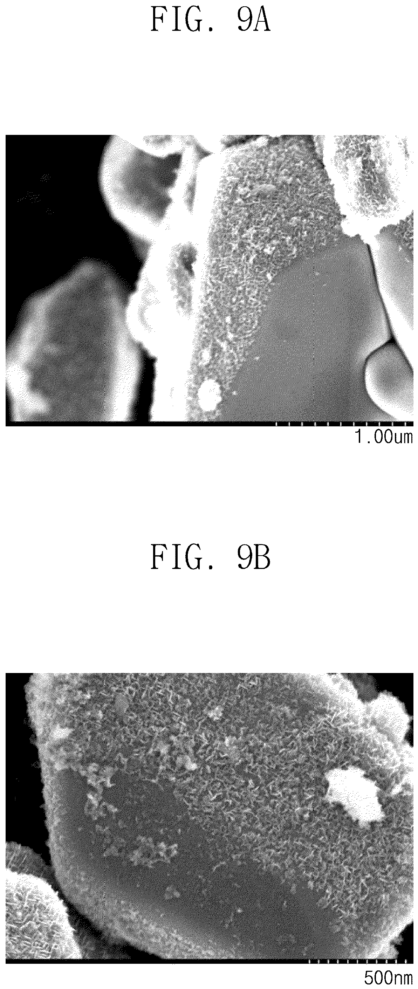

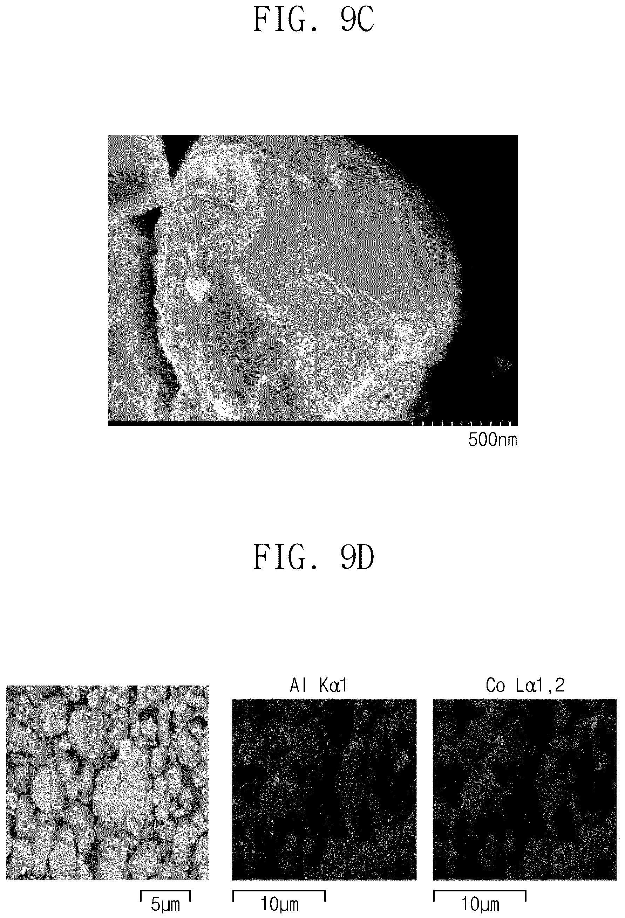

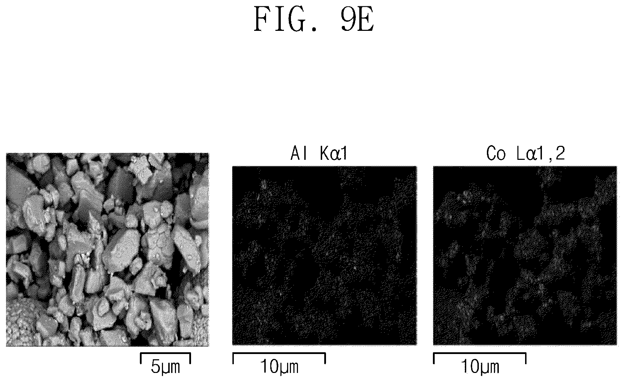

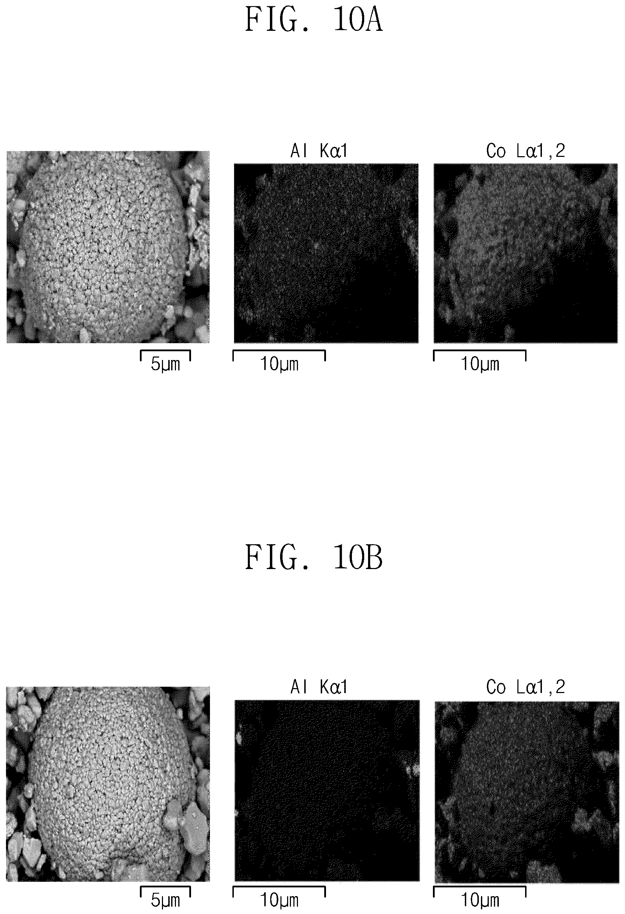

The results were shown in FIGS. 8A-8C, 9A-9E, and 10A-10B. FIGS. 8A to 8C show the SEM-EDS results of the first particle PTC1 in Comparative Example 1. FIGS. 9A, 9B, and 9C show the SEM result of the first particles PTC1 in Embodiments 1, 2, and 3, respectively. FIGS. 9D and 9E show the SEM-EDS results respectively before and after the third calcination of the first particle PTC1 in Example Embodiment 3. FIGS. 10A and 10B show the SEM-EDS results respectively before and after the third calcination of the second particle PTC2 in Example Embodiment 3.

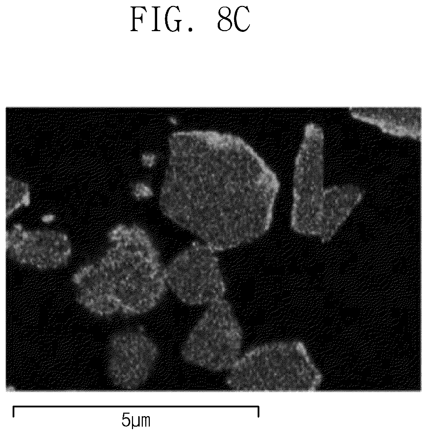

Referring to FIGS. 8A, 8B, and 8C, it may be ascertained that the first coating layer CTL1 was formed on a portion of a surface of the first particle PTC1 of Comparative Example 1, or on the first surface S1 of the first particle PTC1. It was found that the first coating layer CTL1 of Comparative Example 1 includes cobalt (Co), and that the cobalt amount of the first coating layer CTL1 is greater than the cobalt amount within the first particle PTC1.

Referring to FIGS. 9A, 9B, and 9C, it may be ascertained that the first coating layer CTL1 was formed on a portion of a surface of the first particle PTC1 of Embodiments 1 to 3, or on the first surface S1 of the first particle PTC1. Referring to FIGS. 9D and 9E, cobalt (Co) and aluminium (Al) were included in the first coating layer CTL1. Atomic molar ratios of cobalt (Co) and aluminium (Al) were 2:0.1, 2:0.5, and 2:1.0 in Embodiments 1, 2, and 3, respectively. Cobalt (Co) and aluminium (Al) were present on the same position. An unevenly structured portion was included in the first coating layer CTL1 after the third calcination. Cobalt (Co) and aluminium (Al) were distributed on the unevenly structured portion.

Referring to FIGS. 10A and 10B, it may be ascertained that the second coating layer CTL2 was formed to cover surfaces of the second particles PTC2 in Example Embodiments 3. Cobalt (Co) and aluminium (Al) were included in the second coating layer CTL2. Atomic molar ratios of cobalt (Co) and aluminium (Al) were 2:0.1, 2:0.5, and 2:1.0 in Example Embodiments 1, 2, and 3, respectively. Cobalt (Co) and aluminium (Al) were present on the same position. An unevenly structured portion was included in the second coating layer CTL2 after the third calcination. Cobalt (Co) and aluminium (Al) were distributed on the unevenly structured portion.

### Experimental Example 2: Cell Performance and Lifetime Characteristics of Rechargeable Lithium Battery

A charge/discharge test system (Manufacturer: TOYO, Model: TOYO-3100) was used to evaluate the charge/discharge efficiencies and capacity retention rates of coin cells of Example Embodiments 1 to 3, and of Comparative Examples 1 to 4.

Each of the coin cells was charged at 45 °C with a constant current of 0.2 C until a voltage reached 4.3 V, and then was charged with a constant voltage until a current reached 0.05 C. The completely charged cell was discharged to a constant current of 0.2 C until a voltage reached 3 V after a pause of about 10 minutes, and this cycle was repeated 50 times.

Table 2 lists charge/discharge efficiencies and capacity retention rates of the coin cells in Embodiments 1 to 3 and Comparative Examples 1 to 4.

**[Table 2]**

| Category | Charge capacity (mAh/g) | Discharge capacity (mAh/g) | Efficiency (%) | Capacity retention rate (%) |
|---|---|---|---|---|
| Example Embodiment 1 | 248.8 | 217.7 | 87.50% | 95.20% |
| Example Embodiment 2 | 248.5 | 214.0 | 86.10% | 95.80% |
| Example Embodiment 3 | 247.6 | 211.0 | 85.20% | 96.50% |
| Comparative Example 1 | 249.3 | 216.6 | 86.90% | 94.30% |
| Comparative Example 2 | 243.1 | 204.0 | 83.90% | 93.20% |
| Comparative Example 3 | 245.6 | 207.5 | 84.50% | 92.50% |
| Comparative Example 4 | 246.5 | 208 | 84.38% | 97.30% |

Referring to Table 1, the coin cells of Example Embodiments 1 to 3 exhibited improved, advantageous or desired charge/discharge efficiency and capacity retention rate. The charge capacity and the discharge capacity were greater in the coin cells of Example Embodiments 1 to 3 than in the coin cells of Comparative Examples 1 to 4. It was ascertained that the charge capacity of the coin cell in Comparative Example 4 is less than the charge capacity of the coin cells in Example Embodiments 1 to 3. It may thus be understood that a resistance of the positive electrode active material becomes higher when an amount of Al is deviated from the range above.

It was also ascertained that the capacity retention rate is greater in the coin cells of Example Embodiments 1 to 3 than in the coin cells of Comparative Examples 1 to 4. Therefore, it was estimated that the positive electrode active material of Embodiments 1 to 3 have improved, advantageous or desired durability, and that the coin cells of Example Embodiments 1 to 3 exhibit superior stability.

In a positive electrode active material for a rechargeable lithium battery according to example embodiments, a first particle as a small particle may include a cobalt (Co) coating layer and an aluminium (Al) coating layer on a portion of a surface thereof. Therefore, the positive electrode active material of the present invention may exhibit improved, advantageous or desired durability. A rechargeable lithium battery that uses the positive electrode active material of the example embodiments may improve in discharge/discharge efficiency and capacity retention rate.

Although some example embodiments of the present invention have been discussed with reference to accompanying figures, it will be understood that various changes in form and details may be made therein without departing from the scope of the example embodiments. It therefore will be understood that the example embodiments described above are just illustrative but not limitative in all aspects.

Embodiments are set out in the following clauses:
Clause 1. A positive electrode active material, comprising:
   a first particle that has a first surface and a second surface, the first particle including lithium composite oxide; and
   a first coating layer on the first surface,
   wherein a surface area ratio of the first surface and the second surface is in a range of about 3:7 to about 8:2,
   wherein the first coating layer has a cobalt amount greater than a cobalt amount of the first particle, and
   wherein the cobalt amount of the first coating layer is in a range of about 30 at% to about 100 at%.
Clause 2. The positive electrode active material of clause 1, wherein the first coating layer further includes aluminium.
Clause 3. The positive electrode active material of clause 2, wherein an atomic molar ratio of cobalt and aluminium in the first coating layer is in a range of about 2:0.05 to about 2:1.
Clause 4. The positive electrode active material of any one of clauses 1 to 3, wherein the first particle is a single crystal.
Clause 5. The positive electrode active material of any one of clauses 1 to 4, wherein an average particle diameter of the first particle is in a range of about 1 µm to about 5 µm.
Clause 6. The positive electrode active material of any one of clauses 1 to 5, wherein the first particle includes a first lithium composite oxide expressed by Chemical Formula 1,

   [Chemical Formula 1] Liₐ₁Niₓ₁Ma₁₋ₓ₁O_{b1}

   In Chemical Formula 1,
   a1 is about 0.5 to about 1.5,
   x1 is about 0.6 to about 0.99,
   b1 is about 1.8 to about 2.2,
   1-x1 is about 0.01 to about 0.4, and
   Ma includes at least one element selected from Co, Al, Mn, Na, Mg, Ca, Y, Ti, Hf, V, Nb, Ta, Cr, Mo, W, Fe, Cu, Ag, Zn, B, Ga, C, Si, and Sn.
Clause 7. The positive electrode active material of any one of clauses 1 to 6, further comprising:
   a second particle; and
   a second coating layer on a surface of the second particle,
   wherein an average particle diameter of the second particle is greater than an average particle diameter of the first particle.
Clause 8. The positive electrode active material of clause 7, wherein the average particle diameter of the second particle is in a range of about 10 µm to about 25 µm.
Clause 9. The positive electrode active material of clause 7 or clause 8, wherein the second particle is a secondary particle in which a plurality of primary particles are aggregated.
Clause 10. The positive electrode active material of any one of clauses 7 to 9, wherein the second particle is polycrystalline.
Clause 11. The positive electrode active material of any one of clauses 7 to 10, wherein the second coating layer has a cobalt amount greater than a cobalt amount of the second particle,
   wherein the cobalt amount of the second coating layer is in a range of about 30 at% to about 100 at%.
Clause 12. The positive electrode active material of any one of clauses 7 to 11, wherein the second coating layer includes cobalt and aluminium,
   wherein an atomic molar ratio of cobalt and aluminium in the second coating layer is in a range of about 2:0.05 to about 2:1.
Clause 13. The positive electrode active material of any one of clauses 7 to 12, wherein the second coating layer is formed on an entirety of the surface of the second particle.
Clause 14. The positive electrode active material of any one of clauses 7 to 13, wherein the second particle includes a second lithium composite oxide expressed by Chemical Formula 2,

   [Chemical Formula 2] Liₐ₂Niₓ₂Mb₁₋ₓ₂O_{b2}

   In Chemical Formula 2,
   a2 is about 0.5 to about 1.5,
   x2 is about 0.6 to about 0.99,
   b2 is about 1.8 to about 2.2,
   1-x2 is about 0.01 to about 0.4, and
   Mb includes at least one element selected from Co, Al, Mn, Na, Mg, Ca, Y, Ti, Hf, V, Nb, Ta, Cr, Mo, W, Fe, Cu, Ag, Zn, B, Ga, C, Si, and Sn.
Clause 15. A method of manufacturing a positive electrode active material, the method comprising:
   synthesizing a first particle that contains a first lithium composite oxide;
   synthesizing a second particle that contains a second lithium composite oxide; and
   coating a precursor mixture on a mixture of the first and second particles,
   wherein the precursor mixture includes a cobalt compound and an aluminium compound, and
   wherein coating the precursor mixture is performed at about 650 °C to about 900 °C.
Clause 16. The method of clause 15, wherein, in coating the precursor mixture,
   the cobalt compound includes at least one selected from cobalt nitrate, cobalt sulfate, and cobalt oxide, and
   the aluminium compound includes at least one selected from aluminium sulfate and sodium aluminate.
Clause 17. The method of clause 15 or clause 16, coating the precursor mixture includes adding the cobalt compound and the aluminum compound such that an atomic an atomic molar ratio of the cobalt and the aluminum is in a range of about 2:0.05 to about 2:1.
Clause 18. The method of any one of clauses 15 to 17, wherein coating the precursor mixture includes using an alkali for deposition,
   wherein the alkali includes at least one selected from sodium hydroxide, lithium hydroxide, potassium hydroxide, and ammonia.
Clause 19. The method of any one of clauses 15 to 18, wherein coating the precursor mixture includes performing a wet coating process.
Clause 20. A rechargeable lithium battery comprising the positive electrode active material according to any one of clauses 1 to 14.

## Claims

1. A positive electrode active material, comprising:
a first particle that has a first surface and a second surface, the first particle including a lithium composite oxide; and
a first coating layer on the first surface,
wherein a surface area ratio of the first surface to the second surface is in a range of about 3:7 to about 8:2,
wherein the first coating layer has a cobalt amount that is greater than a cobalt amount of the first particle, and
wherein the cobalt amount of the first coating layer is in a range of about 30 at% to about 100 at%.

2. The positive electrode active material of claim 1, wherein the first coating layer further comprises aluminium.

3. The positive electrode active material of claim 2, wherein an atomic molar ratio of cobalt and aluminium in the first coating layer is in a range of about 2:0.05 to about 2:1.

4. The positive electrode active material of any one of claims 1 to 3, wherein the first particle is a single crystal.

5. The positive electrode active material of any one of claims 1 to 4, wherein an average particle diameter of the first particle is in a range of about 1 µm to about 5 µm.

6. The positive electrode active material of any one of claims 1 to 5, wherein the first particle comprises a first lithium composite oxide expressed by Chemical Formula 1,
[Chemical Formula 1] Liₐ₁Niₓ₁Ma₁₋ₓ₁O_{b1}
wherein in Chemical Formula 1:
a1 is about 0.5 to about 1.5,
x1 is about 0.6 to about 0.99,
b1 is about 1.8 to about 2.2,
and
Ma includes at least one of Co, Al, Mn, Na, Mg, Ca, Y, Ti, Hf, V, Nb, Ta, Cr, Mo, W, Fe, Cu, Ag, Zn, B, Ga, C, Si, and Sn.

7. The positive electrode active material of any one of claims 1 to 6, further comprising:
a second particle; and
a second coating layer on a surface of the second particle,
wherein an average particle diameter of the second particle is greater than an average particle diameter of the first particle.

8. The positive electrode active material of claim 7, wherein the average particle diameter of the second particle is in a range of about 10 µm to about 25 µm.

9. The positive electrode active material of claim 7 or claim 8, wherein the second particle is a secondary particle in which a plurality of primary particles are aggregated.

10. The positive electrode active material of any one of claims 7 to 9, wherein the second particle is a polycrystalline.

11. The positive electrode active material of any one of claims 7 to 10, wherein the second coating layer has a cobalt amount that is greater than a cobalt amount of the second particle,
wherein the cobalt amount of the second coating layer is in a range of about 30 at% to about 100 at%.

12. The positive electrode active material of any one of claims 7 to 11, wherein the second coating layer includes at least one of cobalt and aluminium,
wherein an atomic molar ratio of cobalt and aluminium in the second coating layer is in a range of about 2:0.05 to about 2: 1.

13. The positive electrode active material of any one of claims 7 to 12, wherein the second coating layer is formed on substantially an entirety of the surface of the second particle.

14. The positive electrode active material of any one of claims 7 to 13, wherein the second particle comprises a second lithium composite oxide expressed by Chemical Formula 2,
[Chemical Formula 2] Liₐ₂Niₓ₂Mb₁₋ₓ₂O_{b2}
In Chemical Formula 2,
a2 is about 0.5 to about 1.5,
x2 is about 0.6 to about 0.99,
b2 is about 1.8 to about 2.2,
and
Mb includes at least one of Co, Al, Mn, Na, Mg, Ca, Y, Ti, Hf, V, Nb, Ta, Cr, Mo, W, Fe, Cu, Ag, Zn, B, Ga, C, Si, and Sn.

15. A method of manufacturing a positive electrode active material, the method comprising:
synthesizing a first particle that contains a first lithium composite oxide;
synthesizing a second particle that contains a second lithium composite oxide; and
coating a precursor mixture on a mixture of the first and second particles,
wherein the precursor mixture includes a cobalt compound and an aluminium compound, and
wherein coating the precursor mixture is performed at a temperature of about 650 °C to about 900 °C.
